# EUROPÄISCHE PATENTSCHRIFT

(11) **EP 1 013 341 B1**
(45) Veröffentlichungstag und Bekanntmachung des Hinweises auf die Patenterteilung: **10.12.2003**
(21) Anmeldenummer: 99125454.1
(22) Anmeldetag: 17.12.1999
(51) Int. Cl.: B01L 3/00, B01J 19/00

(54) **Vorrichtung zum Ableiten einer Flüssigkeit aus Kapillaren**
Device for draining a liquid from a capillary
Dispositif de drainage d'un liquide hors d'un capillaire

(30) Priorität: 23.12.1998 DE 19859693
(43) Veröffentlichungstag der Anmeldung: 28.06.2000
(73) Patentinhaber: STEAG microParts GmbH, 44227 Dortmund (DE)
(72) Erfinder: Peters, Ralf-Peter, Dr., 51467 Bergisch-Gladbach (DE)

(56) Entgegenhaltungen:
- EP-A- 0 336 483
- EP-A- 0 348 006
- WO-A-99/46045
- DE-A- 19 810 499
- US-A- 5 286 454

## Beschreibung

Die Erfindung betrifft eine Vorrichtung zum Ableiten einer benetzenden Flüssigkeit aus einer oder mehreren Kapillaren.
Die Erfindung bezweckt, das Ableiten einer Flüssigkeit aus Kapillaren zu erleichtern oder zu ermöglichen, damit die Flüssigkeit als frei fließende Flüssigkeit erhalten wird

Kapillaren sind enge räumliche Gebilde, in denen Oberflächeneffekte von Flüssigkeiten auftreten. Ihre Querschnittsform ist beliebig, sie umfassen Röhren und Spalte. Die Abmessungen des Querschnitts liegen in mindestens einer Richtung im Millimeter- bis Submikrometer-Bereich. Der räumliche Verlauf der Kapillaren ist beliebig.
Kapillaren können als diskrete Gebilde in Form von einzelnen geraden oder gebogenen Röhren mit einer relativ dünnen Wand vorliegen, oder sie können röhrenförmig einen Körper durchziehen. Weiter können sie Poren in einem offenporigen porösen Körper oder Sinterkörper sein, oder als Räume zwischen eng gepackten Fasern in Form von Papier, Vlies oder Filz vorliegen. Sie können ferner die Form von engen Spalten haben.

Die Oberfläche einer an eine feste Wand grenzenden benetzenden Flüssigkeit bildet mit der Wand einen Randwinkel von 0 Grad bis kleiner 90 Grad; unvollkommen benetzende Flüssigkeiten haben einen Randwinkel, der größer als Null ist. Benetzende Flüssigkeiten werden wegen ihrer Oberflächenspannung in Kapillaren hineingezogen, bis diese vollständig gefüllt sind. Bei kleiner Kraft, die am Austrittsende der Kapillaren auf die Flüssigkeit wirkt, kann die Oberflächenspannung die Flüssigkeit in den Kapillaren zurückhalten und deren Austreten verhindern. Das Austreten der Flüssigkeit aus dem Ende der Kapillaren kann durch eine hinreichend große Druckdifferenz in der Flüssigkeit zwischen Kapillareintritt und Kapillaraustritt erzwungen werden.
Aus EP - 0 336 483 ist eine Vorrichtung zum Trennen einer vorgelegten Flüssigkeit bekannt, die aus einer ersten offenporige Membran (Trennmembran) und einer zweite offenporige Membran (Sammelmembran) besteht, wobei die Sammelmembran an der Austrittsseite der Trennmembran dicht anliegt. Der Teil der auf der einen Seite der Trennmembran vorgelegten Flüssigkeit, der die Trennmembran durchdrungen hat, tritt in die Sammelmembran über, in der er verbleibt. Die in der von der Trennmembran abgehobenen Sammelmembran gesammelte Flüssigkeit kann mit einem Reagenz, das auf die Sammelmembran aufgebracht wird, zur Reaktion gebracht werden, oder die gesammelte Flüssigkeit kann mittels einer weiteren Flüssigkeit aus der Sammelmembran ausgewaschen und anschließend untersucht werden. Die mittels der Trennmembran abgetrennte und in der Sammelmembran gesammelte Flüssigkeit kann während ihrer weiteren Untersuchung also in der Sammelmembran verbleiben, oder sie kann ausgewaschen werden, wobei sie mit einer weiteren Flüssigkeit vermischt wird. In beiden Fällen wird keine frei fließende Flüssigkeit erhalten, die nur aus dem Teil der vorgelegten Flüssigkeit besteht, der mittels der Trennmembran abgetrennt worden ist.

Zur Untersuchung oder Verwendung von Flüssigkeiten, die mit Hilfe von Kapillaren gesammelt oder aus einem flüssigen Medium abgetrennt worden sind, kann es zweckmäßig oder notwendig sein, die Flüssigkeit aus den Kapillaren als frei fließende Flüssigkeit zu erhalten, die mit keiner weiteren Flüssigkeit vermischt ist.

Damit stellt sich die Aufgabe, eine Vorrichtung anzugeben, mittels der die Flüssigkeit aus einer oder mehreren Kapillaren abgeleitet und in einem Sammelraum als frei fließende Flüssigkeit gesammelt werden kann. In einem hinreichend großen Sammelraum sind Oberflächeneffekte praktisch nicht mehr wirksam.

Diese Aufgabe wird erfindungsgemäß gelöst durch eine Vorrichtung mit folgenden kennzeichnenden Merkmalen:
- jeweils eine keilförmige Aussparung in einem Körper am Austrittsende der Kapillare, in die die mindestens eine Kapillare übergeht,
- und einen Krümmungsradius der Keilkante der Aussparung, der kleiner ist als die Hälfte der kleinsten Abmessung der größten Kapillare, die in eine keilförmige Aussparung übergeht,
- und einen Keilwinkel zwischen den Keilflächen der Aussparung in der Nähe der Keilkante, der kleiner als 150 Grad ist,
- wobei sich der Sammelraum an die Grundseite der keilförmigen Aussparung anschließt.

Die keilförmige Aussparung hat eine Keilkante und eine Grundseite. Der Krümmungsradius der Keilkante ist kleiner als der Krümmungsradius einer Kapillare mit kreisrundem Querschnitt. Bei Kapillaren mit beliebigem Querschnitt, dessen Abmessungen jedoch in zwei zueinander senkrechten Richtungen in derselben Größenordnung liegen, ist der Krümmungsradius der Keilkante kleiner als der äquivalente Radius der nicht runden Kapillare. Der äquivalente Radius einer Kapillare mit nicht rundem Querschnitt ist der Radius eines Kreises, dessen Fläche gleich der Fläche des nicht kreisrunden Querschnitts der Kapillare ist Bei Kapillaren, die als Poren in einem offenporigem Körper vorliegen, ist die Querschnittsfläche der Kapillaren über einen Querschnittsbereich verteilt. In diesem Fall ist der Krümmungsradius der Keilkante kleiner als die Hälfte der kleinsten Abmessung der Kapillare mit dem größten Querschnitt. Bei schlitzförmigen Kapillaren ist der Krümmungsradius der Keilkante kleiner als die halbe Dicke des Schlitzes.
An die Keilkante schließen sich die beiden Keilflächen der Aussparung an, die miteinander den Keilwinkel bilden, der kleiner als 150 Grad, bevorzugt kleiner als 90 Grad ist. Die Keilflächen der Aussparung können im Bereich der Grundseite konvex abgerundet sein.

Die erfindungsgemäße Vorrichtung kann in einem einstückigen Körper vorliegen oder aus zwei Teilen zusammengesetzt sein.
Bei der zweistückigen Ausführung befindet sich die mindestens eine Kapillare in dem ersten Körper. Der zweite Körper besteht aus einer Trägerplatte, die auf einer Seite mit bevorzugt mehreren Vorsprüngen versehen ist. In mindestens einem dieser Vorsprünge befindet sich mindestens eine keilförmige Aussparung. Ein Vorsprung kann mit mehreren keilförmigen Aussparungen versehen sein, die jeweils mindestens einer Kapillare zugeordnet sind. Das freie Ende des mindestens einen Vorsprunges berührt die Fläche des ersten Körpers, in der sich das Austrittsende der mindestens einen Kapillare befindet Der Anfang der Keilkante der keilförmigen Aussparung liegt innerhalb der Austrittsfläche der Kapillare. Ein gegebenenfalls vorhandener geringer Abstand zwischen dem ersten Körper und den freien Enden der Vorsprünge des zweiten Körpers hat keinen Einfluß auf die Wirkung der erfindungsgemäßen Vorrichtung, so lange die an den Austrittsenden der Kapillaren im ersten Körper anstehende Flüssigkeit das freie Ende eines Vorsprungs des zweiten Körpers berührt.
Weiter ist in der Umgebung der keilförmigen Aussparungen, die in den Vorsprüngen angebracht sind, ein Sammelraum vorgesehen, der im wesentlichen begrenzt ist von der Seite der Trägerplatte, auf der die Vorsprünge angebracht sind, und von der Seite des ersten Körpers, in der die Austrittsflächen der Kapillaren liegen.
Bei der zweistückigen Ausführung kann der erste Körper eine einzelne Kapillare oder mehrere Einzelkapillaren enthalten. Der erste Körper kann ferner eine offenporige Membran oder ein offenporiger Sinterkörper sein, oder er kann aus Fasern bestehen, wie ein Vlies, ein Filz oder Papier, z.B. Fließpapier. Derartige Körper haben bevorzugt eine ebene Austrittsseite. Im letzten Fall ist es hinreichend, die freien Enden von Vorsprüngen, die mindestens eine keilförmige Aussparung enthalten, mit der Austrittsseite der offenen Poren in dem ersten Körper in Berührung zu bringen. Wegen der Vielzahl von statistisch verteilten Poren, die innerhalb eines derartigen Körpers in der Regel ineinander übergehen, kann die Lage des Anfanges der Keilkante am freien Ende der Vorsprünge praktisch frei gewählt werden, sofern hinreichend viele keilförmige Aussparungen vorhanden sind.
Bei der zweistückigen Ausführung der erfindungsgemäßen Vorrichtung kann die Keilkante der keilförmigen Aussparung, die in den Vorsprüngen auf der einen Seite des zweiten Körpers vorhanden sind, auf der Seite des ersten Körpers, in der sich die Austrittsenden der Kapillaren befinden, senkrecht stehen (Winkel zwischen Keilkante und der Seite des ersten Körpers gleich 90 Grad) oder gegen diese Seitenfläche um einen Winkel von mindestens 20 Grad geneigt sein.
Die Vorsprünge können die Form von Säulen, Kegeln, Pyramiden oder Stegen haben, die inselförmig angeordnet sind. Die Stege können gerade oder gekrümmt sein und auf ihrer einen Seite oder ihren beiden Seiten mit keilförmigen Aussparungen versehen sein.
Die einstückige Ausführung enthält mindestens eine Kapillare und einen Sammelraum, in den die Kapillare mündet. Am Austrittsende der Kapillare ist in der Wand des Sammelraumes eine keilförmige Aussparung vorhanden. Der Anfang der Keilkante der keilförmigen Aussparung liegt in der Wand der Kapillare in der Nähe ihres Austrittsendes.

Falls in dem Sammelraum, in dem die aus den Kapillaren abgeleitete Flüssigkeit zunächst gesammelt wird, Oberflächeneffekte und Kapillarkräfte wirksam sind, kann die erfindungsgemäße Vorrichtung, die aus mindestens einer Kapillare, mindestens einer keilförmigen Aussparung und mindestens einem Sammelraum besteht bezüglich der keilförmigen Aussparung und des Sammelraumes mehrfach hintereinander angeordnet werden, bis in dem letzten von mehreren Sammelräumen praktisch keine Oberflächeneffekte mehr wirksam sind. Bei mehreren Sammelräumen, die - in Strömungsrichtung der Flüssigkeit gesehen - hintereinander angeordnet sind, ist die die Kapillarität bestimmende Abmessung des zweiten Sammelraumes größer als die die Kapillarität bestimmende Abmessung des ersten Sammelraumes, und die die Kapillarität bestimmende Abmessung des dritten Sammelraumes ist größer als die die Kapillarität bestimmende Abmessung des zweiten Sammelraumes.

Die Wirkung der erfindungsgemäßen Vorrichtung beruht auf der Saugwirkung der keilförmigen Aussparungen mit den angegebenen Abmessungen und in der angegebenen Anordnung auf benetzende Flüssigkeiten, die an der keilförmigen Aussparung anstehen, und in der Verminderung der Oberflächeneffekte im Sammelraum, wobei die Oberflächeneffekte im Sammelraum gegebenenfalls durch mehrfache Anordnung der erfindungsgemäßen Vorrichtung auf ein unbedeutendes Maß herabgesetzt werden.
Die erfindungsgemäße Vorrichtung ist kontinuierlich wirksam, so lange am Anfang der Keilkante Flüssigkeit ansteht und der Sammelraum in der Umgebung der keilförmigen Aussparungen nur auf seinem Boden mit einer Flüssigkeitsschicht bedeckt ist und sich darüber bis zur Höhe des Anfanges der Keilkante der keilförmigen Aussparung keine Flüssigkeit befindet.

Die erfindungsgemäße Vorrichtung hat folgende Vorteile:
- Bei Anwendung der Vorrichtung wird eine frei fließende Flüssigkeit erhalten, die sich in einem Sammelraum befindet und nicht in einer Sammelmembran festgehalten wird
- Die frei fließende Flüssigkeit ist nicht mit einer anderen Flüssigkeit vermischt.
- Sie ermöglicht das Sammeln einer frei fließenden Flüssigkeit bis hinab in den Bereich von Mikrolitern.
- Sie ist unabhängig von der Schwerkraft wirksam, die räumliche Richtung der Keilkante ist beliebig.

Die erfindungsgemäße Vorrichtung kann aus Kunststoff, zum Beispiel Poly(methylmethacrylat) (PMMA), Polycarbonat (PC), Polystyrol (PS) oder ähnlichem, oder aus Metall, zum Beispiel Nickel, Kupfer, Kobalt, Stahl sowie deren Legierungen, oder aus einem Halbleiter, zum Beispiel Silizium, Germanium, bestehen.
Die geometrischen Mikrostrukturen können zum Beispiel durch Röntgen-Tiefenlithographie, UV-Lithographie, feinmechanische Präzisionsbearbeitung, Laserbearbeitung, Trockenätzen oder Naßätzen hergestellt werden.
Sie können zunächst in einem Kunststoff erzeugt werden und durch galvanisches Abscheiden von Metall in eine komplementäre Struktur aus Metall umgeformt werden. Diese komplementäre Struktur kann als Formeinsatz verwendet werden, mit dem viele der gewünschten Mikrostrukturen aus Kunststoff mit Hilfe der Spritzgießtechnik abgeformt werden.
Ferner kann eine Mikrostruktur, die zu der gewünschten Mikrostruktur komplementär ist, in Kunststoff hergestellt werden, aus der die gewünschte metallene Mikrostruktur durch galvanisches Abscheiden von Metall abgeformt wird.

Die erfindungsgemäße Vorrichtung kann unter anderem verwendet werden zum Abtrennen einer Flüssigkeit aus einem feststoffhaltigen Medium mittels einer Filtermembran, zum Abtrennen von Blutplasma aus Vollblut mittels einer Trennmembran oder zum Befüllen der Näpfchen einer Mikrotiterplatte über eine Zuleitungskapillare.

Die erfindungsgemäße Vorrichtung wird anhand der Figuren näher erläutert. Die Figuren 1 bis 4 beziehen sich auf eine aus zwei Körpern zusammengesetzte zweistückige Vorrichtung, die Figuren 5 und 6 beziehen sich auf eine einstückige Vorrichtung. In den Figuren 7 und 8 ist eine zweistückige Vorrichtung dargestellt, bei der drei Sammelräume mit den zugehörenden keilförmigen Aussparungen hintereinander angeordnet sind.

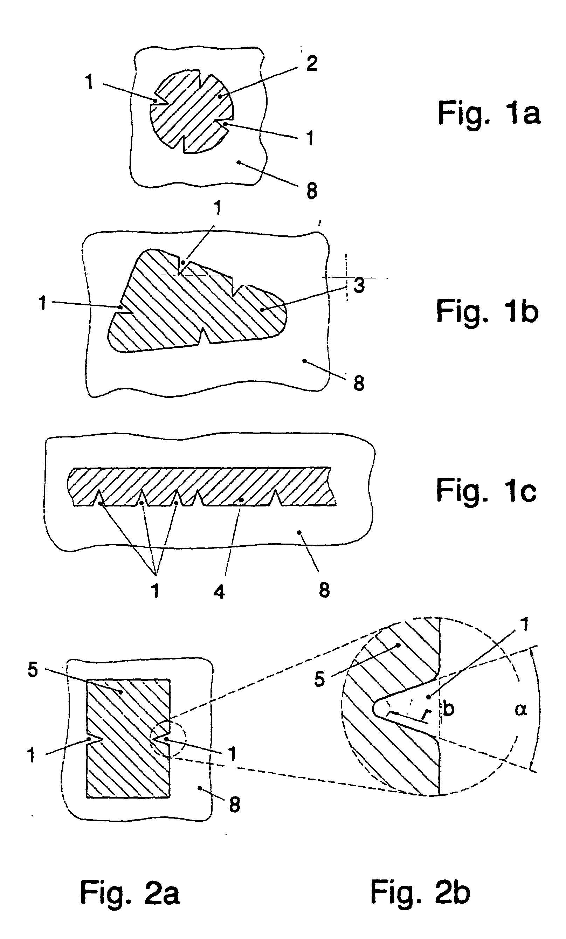

Figur 1a zeigt einen auf einer Trägerplatte (8) befindlichen säulenförmigen Vorsprung (2) mit kreisförmigem Querschnitt und mit vier keilförmigen Aussparungen (1). Figur 1b zeigt einen säulenförmigen Vorsprung (3) mit unregelmäßigem dreieckigen Querschnitt und mit vier keilförmigen Aussparungen (1). Figur 1c zeigt einen Abschnitt eines stegförmigen Vorsprungs (4) mit mehreren keilförmigen Aussparungen (1) auf seiner einen Seite.
Figur 2a zeigt einen säulenförmigen Vorsprung (5) mit rechteckigem Querschnitt und mit zwei keilförmigen Aussparungen (1). In Figur 2b sind Einzelheiten zu der keilförmigen Aussparungen (1) angegeben, und zwar der Krümmungsradius (r) der Keilkante, der Keilwinkel (α) zwischen den Keilflächen der Aussparung sowie die Grundseite (b) der keilförmigen Aussparung.

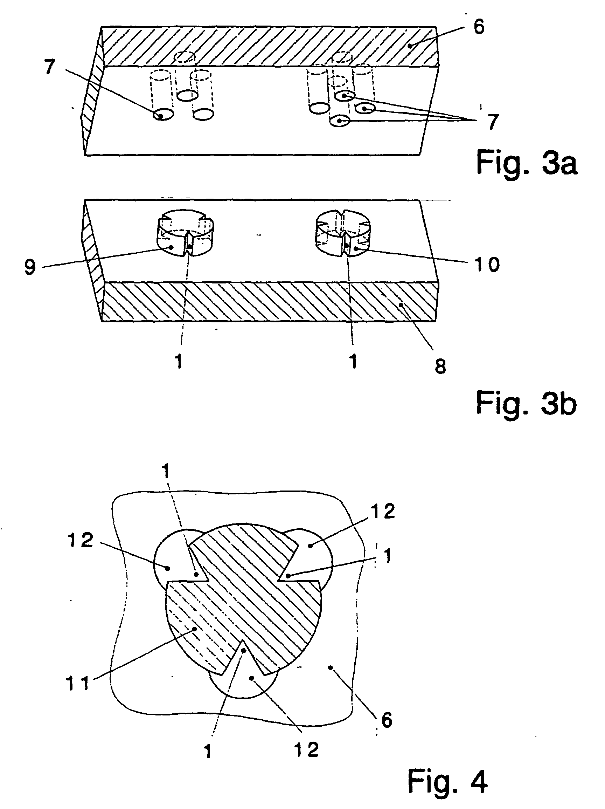

In Figur 3a ist ein plattenförmiger erster Körper (6) mit mehreren Kapillaren (7) dargestellt. In Figur 3b ist als zweiter Körper eine Trägerplatte (8) mit zwei säulenförmigen Vorsprüngen (9) und (10) dargestellt. Der Vorsprung (9) trägt in seiner Mantelfläche drei keilförmige Aussparungen ( 1 ), der Vorsprung (10) trägt vier keilförmige Aussparungen (1). Beim Aneinanderlegen der beiden Körper liegt das freie Ende jeweils einer keilförmigen Aussparung (1) an den Vorsprüngen (9) und (10) in der Austrittsfläche jeweils einer der Kapillaren (7). Der Vorsprung (9) ist drei Kapillaren zugeordnet, der Vorsprung (10) ist vier Kapillaren zugeordnet.
Der Raum, der von der Oberseite der Trägerplatte (8) und der Unterseite des ersten Körpers (6) begrenzt wird, und der in der Umgebung der Vorsprünge (9) und (10) liegt, ist der Sammelraum, der sich an die Grundseite der keilförmigen Aussparungen anschließt.
Figur 4 zeigt eine Teilansicht der Unterseite eines ersten Körpers (6) mit den Austrittsenden von drei annähernd kreisförmigen Kapillaren (12). Der im Querschnitt dargestellt säulenförmige Vorsprung (11) hat drei keilförmige Aussparungen (1), die jeweils einer Kapillare zugeordnet sind. Das freie Ende der Keilkante jeder keilförmigen Aussparung (1) liegt innerhalb der Austrittsfläche jeweils einer Kapillare (12).

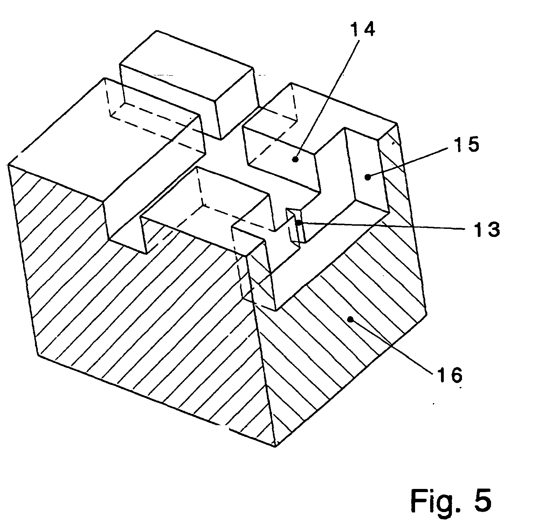

Figur 5 zeigt in Verbindung mit Figur 2 eine einstückige Ausführung, in der der Bereich des Überganges einer Kapillare in einen größeren Sammelraum in Schrägansicht als abgebrochener Abschnitt dargestellt ist. Die Kapillare (14), die keilförmige Aussparung (13) und der Sammelraum ( 15) mit rechteckigem Querschnitt sind in einem einstückigen Körper (16) angeordnet. Die keilförmige Aussparung (13) schließt sich nahtlos an das Austrittsende der Kapillare (14) mit rechteckigem Querschnitt an. Die Keilkante der keilförmigen Aussparung (13) steht senkrecht auf der Wand der Kapillare (14) und reicht bis zur Bodenfläche des Sammelraumes (15). Bei der Ausführung nach Figur 5 ist gegebenenfalls eine (nicht dargestellte) Deckplatte auf der Oberseite des einstückigen Körpers (16) vorhanden.

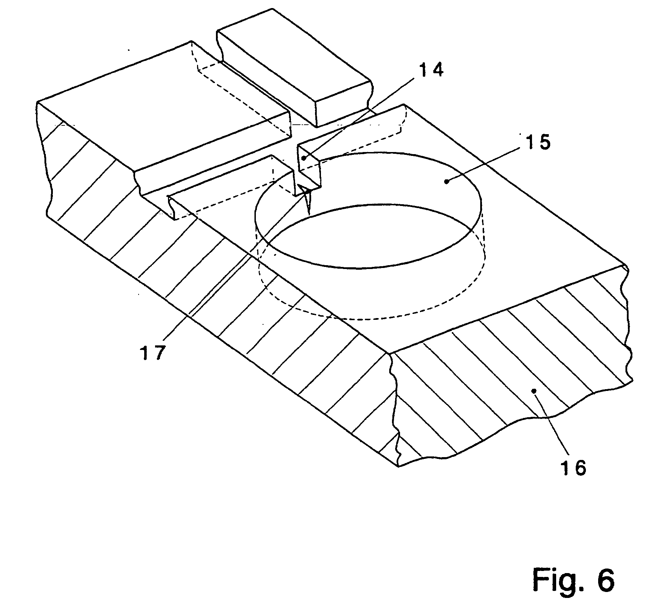

Figur 6 zeigt eine weitere Form einer einstückigen Ausführung in Schrägansicht. Die Kapillare (14), die keilförmige Aussparung (17) und der Sammelraum (15) mit rundem Querschnitt sind in einem einstückigen Körper (16) angeordnet. Die keilförmige Aussparung (17) schließt sich nahtlos an das Austrittsende der Kapillare (14) mit rechteckigem Querschnitt an. Die Keilkante der keilförmigen Aussparung (17) ist gegen die Wand der Kapillare (14) geneigt und trifft oberhalb des Bodens des Sammelraumes (15) auf die Wand dieses Sammelraumes. Bei der Ausführung nach Figur 6 kann eine (nicht dargestellte) Deckplatte auf der Oberseite des einstückigen Körpers (16) vorhanden sein.

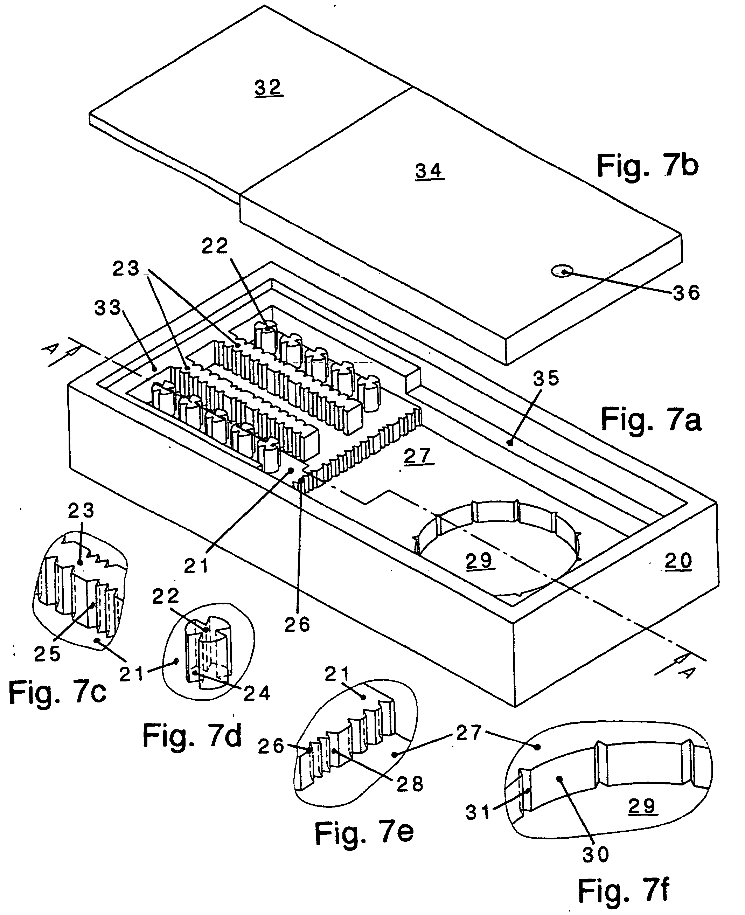

In Figur 7a ist eine Platte (20) dargestellt, auf deren einer Seite die erfindungsgemäße Vorrichtung in dreistufiger Anordnung dargestellt ist. Auf dem Boden (21) des ersten Sammelraumes sind mehrere säulenförmige Vorsprünge (22) und mehrere stegförmige Vorsprünge (23) angebracht. Jeder der säulenförmigen Vorsprünge, von denen einer in Figur 7d vergrößert dargestellt ist, ist mit drei keilförmigen Aussparungen (24) versehen. Jeder der stegförmigen Vorsprünge, von denen ein Abschnitt in Figur 7c vergrößert dargestellt ist, ist mit mehreren keilförmigen Aussparungen (25) versehen. Das freie Volumen zwischen den säulenförmigen Vorsprüngen (22) und den stegförmigen Vorsprüngen (23) bildet das Volumen des ersten Sammelraumes.
An die Kante (26) des Bodens (21) des ersten Sammelraumes schließt sich der zweite Sammelraum mit dem Boden (27) an. In der Stufe am Ende des ersten Sammelraumes sind mehrere keilförmige Aussparungen (28) angebracht, von denen einige in Figur 7e vergrößert dargestellt sind. Die Aussparungen (28) reichen vom Boden (21) des ersten Sammelraumes bis zum Boden (27) des zweiten Sammelraumes. Das freie Volumen oberhalb des Bodens (27) bildet das Volumen des zweiten Sammelraumes.
Im Boden (27) des zweiten Sammelraumes ist der dritte Sammelraum in Form einer runden Vertiefung mit dem Boden (29) angebracht. Der Rand (30) dieser Vertiefung ist mit mehreren keilförmigen Aussparungen (31) versehen, von denen einige in Figur 7f vergrößert dargestellt sind. Die keilförmigen Aussparungen (31) reichen vom Boden (27) des zweiten Sammelraumes bis zum Boden (29) des dritten Sammelraumes. Das freie Volumen oberhalb des Bodens (29) bildet das Volumen des dritten Sammelraumes.
Figur 7b zeigt die Abdeckung der Sammelräume. Die Abdeckung (32) für den ersten Sammelraum ist eine mit Kapillaren versehene Trennmembran, deren Unterseite auf den Enden der säulenförmigen Vorsprünge (22) und auf den Längsseiten der stegförmigen Vorsprünge (23) sowie auf dem Rand (33) aufliegt. Die Abdeckung (32) schließt den ersten Sammelraum nach oben ab. Auf diese Trennmembran wird die zu trennende Flüssigkeit aufgebracht. Die Abdeckung (34) ist eine Platte, deren Unterseite auf dem Rand (35) aufliegt, und die den zweiten und dritten Sammelraum nach oben abschließt. In der Platte (34) ist die Entlüftungsöffnung (36) vorgesehen, durch die die Luft aus den Sammelräumen entweicht, sobald die aus der Trennmembran abgeleitete Flüssigkeit in die Sammelräume eintritt. Zwischen der Unterseite der Abdeckung (34) und dem Boden (29) des dritten Sammelraumes liegt die abgetrennte Flüssigkeit in einer definierten Schichtdicke vor, wie sie zum Beispiel für optische Untersuchungen zweckmäßig oder notwendig ist. Für optische Untersuchungen im Durchlicht besteht die Platte (20) aus durchsichtigem Material.

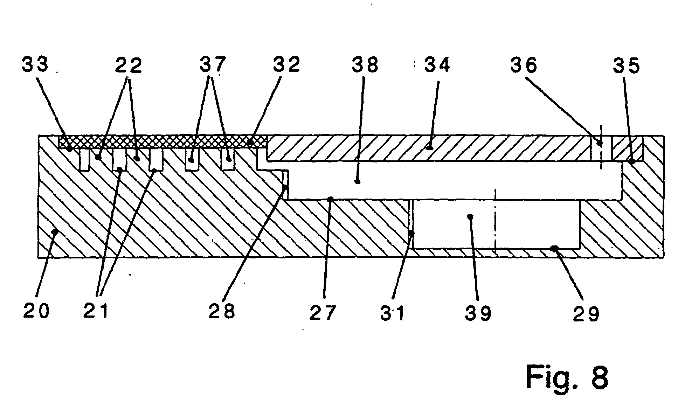

Figur 8 zeigt einen Querschnitt durch die Figur 7a auf der Linie A - A. Dargestellt sind die Platte (20) mit den säulenförmigen Vorsprüngen (22) und dem Boden (21) des ersten Sammelraumes sowie der Boden (27) des zweiten Sammelraumes und der Boden (29) des dritten Sammelraumes. Am Rand des zweiten Sammelraumes sind die keilförmigen Aussparungen (28) angebracht. Am Rand des dritten Sammelraumes sind die keilförmigen Aussparungen (31) angebracht.
Der erste Sammelraum (37) liegt zwischen den Vorsprüngen (22), dem Boden (21) und der Unterseite der Trennmembran (32). Der zweite Sammelraum (38) liegt zwischen dem Boden (27) und der Unterseite der Abdeckung (34). Der dritte Sammelraum (39) liegt zwischen dem Boden (29) und der Unterseite der Abdeckung (34).
Die Kapillarität der in den Figuren 7a und 8 dargestellten Sammelräume wird durch ihre Höhe (Abstand der Unterseite der Abdeckung vom Boden des jeweiligen Sammelraumes) bestimmt. Die Höhe des zweiten Sammelraumes (38) ist größer als die Höhe des ersten Sammelraumes (37). Die Höhe des dritten Sammelraumes (39) ist größer als die Höhe des zweiten Sammelraumes.
In Figur 7a sind im ersten Sammelraum zwei Formen von Vorsprüngen, nämlich Säulen (22) und Stege (23), dargestellt. Im Gegensatz dazu können im ersten Sammelraum nur säulenförmige Vorsprünge (22) in fast beliebiger räumlicher Anordnung vorhanden sein, oder es können nur stegförmige Vorsprünge (23) vorhanden sein.
Die keilförmigen Aussparungen (24; 25; 28; 31) können sich sägezahnförmig direkt aneinander anschließen, oder sie können in einem Abstand voneinander angebracht sein; beide Varianten sind in den Figuren 7a, 7c, 7d, 7e und 7f dargestellt.

### Beispiel 1: Befüllen einer Mikrokammer

In eine etwa 1,5 Millimeter dicke Platte aus PMMA werden mittels Röntgen-Tiefenlithographie zwei runde Kammern eingearbeitet, die einen Durchmessser von 1 Millimeter haben und 500 µm tief sind. Zwischen beiden Kammern verläuft ein Kanal, der die beiden Kammern verbindet. Der Kanal ist 100 µm breit, 100 µm tief und etwa 5 Millimeter lang. An der Mündung des Kanals in die eine der beiden Kammern ist eine keilförmige Aussparung angebracht, die bis zum Boden der Kammer reicht (siehe Figur 5). Die keilförmige Aussparung hat eine Keilhöhe von 100 µm, ihre Grundseite ist 50 µm lang, und der Verrundungsradius der Keilkante beträgt 1 µm.
An der Mündung des Kanals in die andere Kammer ist keine keilförmige Aussparung angebracht.
Füllt man den Kanal zwischen den beiden Kammern mit einem Tropfen einer Flüssigkeit, zum Beispiel Tinte, läuft diese Flüssigkeit nur in die Kammer, in der an der Mündung des Kanals eine keilförmige Aussparung angebracht ist. Die andere Kammer, bei der an der Mündung des Kanals keine keilförmige Aussparung angebracht ist, bleibt unbenetzt.

### Beispiel 2: Vorrichtung zum Abtrennen von Blutplasma aus Vollblut

Eine Glasfaser-Zellulose-Membran wird auf eine etwa 1,5 Millimeter dicke Platte aus PMMA gelegt, die durch Spritzguß-Abformtechnik hergestellt worden ist. Die Platte ist auf ihrer Oberseite mit Stegen versehen (siehe Figur 1c). Die Stege sind 500 µm breit und 120 µm hoch und haben einen Abstand von 400 µm voneinander. Auf einer Längsseite jedes Steges sind keilförmige Aussparungen angebracht, die 300 µm in den Steg hineinragen, und deren Keilwinkel 25 Grad beträgt. Der Verrundungsradius der Keilkante beträgt 2 µm. Der Abstand der Aussparungen voneinander beträgt 600 µm. Zwischen der Unterseite der Membran und der Oberseite der Platte befindet sich zwischen zwei Stegen jeweils ein Kanal, der 400 µm breit und 120 µm hoch ist. Alle Kanäle zusammengenommen bilden den Sammelraum. Das Volumen des Sammelraumes beträgt 5,4 Mikroliter pro Quadratzentimeter Plattenfläche.
Wird Vollblut auf die Membran geträufelt, werden in der Membran die Blutzellen vom Blutplasma getrennt. Mittels der keilförmigen Aussparungen an den Seiten der Stege wird das Blutplasma aus der Membran in den Sammelraum geleitet und dort gesammelt. Das Blutplasma liegt in unveränderter Form vor, es ist also nicht mit einer anderen Flüssigkeit vermischt, und kann für eine anschließende Untersuchung direkt verwendet werden.

## Patentansprüche

1. Vorrichtung zum Ableiten einer Flüssigkeit aus mindestens einer Kapillare (7; 12; 14) in einen Sammelraum, umfassend
- jeweils eine keilförmige Aussparung (1; 13; 17) in einem Körper am Austrittsende der Kapillare, in die die mindestens eine Kapillare übergeht,
- und einen Krümmungsradius (r) der Keilkante der Aussparung, der kleiner ist als die Hälfte der kleinsten Abmessung der größten Kapillare, die in eine keilförmige Aussparung übergeht,
- und einen Keilwinkel (α) zwischen den Keilflächen der Aussparung in der Nähe der Keilkante, der kleiner als 150 Grad ist,
- wobei sich der Sammelraum an die Grundseite (b) der keilförmigen Aussparung anschließt.

2. Vorrichtung nach Anspruch 1, wobei
- der Keilwinkel (α) zwischen den Keilflächen der Aussparung in der Nähe der Keilkante kleiner als 90 Grad ist.

3. Vorrichtung nach den Ansprüchen 1 und 2 in zweistückiger Ausführung zum Ableiten einer Flüssigkeit aus mindestens einer Kapillare (7; 12), die einen ersten Körper (6) durchdringt, in einen Sammelraum, der in einem zweiten Körper (8) vorgesehen ist, wobei
- die mindestens eine keilförmige Aussparung (1), in die die mindestens eine Kapillare (7; 12) an ihrem Austrittsende übergeht, in mindestens einem Vorsprung (2; 3; 4; 5; 9; 10; 11 ) angebracht ist, der sich auf einer Trägerplatte (8) als zweitem Körper befindet,
- und das freie Ende des mindestens einen Vorsprunges (2; 3; 4; 5; 9; 10; 11) die Fläche des ersten Körpers (6) berührt, in der sich das Austrittsende der mindestens einen Kapillare (7; 12) befindet,
- und der Anfang der Keilkante der keilförmigen Aussparung (1) innerhalb der Austrittsfläche der mindestens einen Kapillare (7; 12) liegt.

4. Vorrichtung nach Anspruch 3, wobei die mindestens eine Kapillare
- als einzelne Kapillare in dem ersten Körper ausgebildet ist,
- oder als mehrere diskrete Kapillaren (7; 12) oder als diskrete Spalten den ersten Körper (6) durchdringen,
- oder als Poren oder Spalten im ersten Körper vorliegen, wobei der erste Körper
- eine offenporige Membran,
- oder ein offenporiger Sinterkörper,
- oder ein Vlies, ein Filz oder Papier ist.

5. Vorrichtung nach den Ansprüchen 3 und 4, wobei
- die Keilkante der keilförmige Aussparung (1) auf der Fläche des ersten Körpers (6), in der sich die Austrittsenden der Kapillaren (7; 12) befinden, senkrecht steht oder gegen diese Fläche um einen Winkel von mindestens 20 Grad geneigt ist.

6. Vorrichtung nach den Ansprüchen 3 bis 5, wobei
- die keilförmigen Aussparungen (1) in Vorsprüngen angebracht sind, die die Form von Säulen (2; 3; 5; 9; 10; 11), Kegeln, Pyramiden oder Stegen (4) haben.

7. Vorrichtung nach den Ansprüchen 1 und 2 in einstückiger Ausführung, wobei
- jeweils eine einzige keilförmige Aussparung (13; 17) in die mindestens eine Kapillare (14) an ihrem Austrittsende nahtlos übergeht.

8. Vorrichtung nach Anspruch 7, wobei
- die keilförmige Aussparung (13; 17) in der Wand des Sammelraumes (15), in den die mindestens eine Kapillare ( 14) mündet, angebracht ist, und der Anfang der Keilkante der keilförmigen Aussparung (13; 17) in der Wand der Kapillare in der Nähe ihres Austrittsendes liegt.

9. Vorrichtung nach den Ansprüchen 7 und 8, wobei
- die Keilkante der keilförmigen Aussparung (13) auf der Wand der Kapillare (14) senkrecht steht,
- oder die Keilkante der keilförmigen Aussparung (17) gegen die Wand der Kapillare (14) um einen Winkel von mindestens 20 Grad geneigt ist.

10. Vorrichtung nach den Ansprüchen 1 bis 9, wobei
- mehrere Gruppen, die jeweils mindestens eine keilförmige Aussparung und einen Sammelraum umfassen, hintereinander angeordnet sind (24; 25 und 21), (28 und 27), (31 und 29), und die die Kapillarität eines Sammelraumes bestimmende Abmessung größer ist als die die Kapillarität bestimmende Abmessung des jeweils davor angeordneten Sammelraumes.

11. Verwenden der Vorrichtung nach den Ansprüchen 1 bis 10 zum Abtrennen einer Flüssigkeit aus einem flüssigen Medium.

12. Verwenden der Vorrichtung nach den Ansprüchen 1 bis 10
- zum Abtrennen einer Flüssigkeit aus einem feststoffhaltigen Medium mittels einer Filtermembran,
- oder zum Abtrennen von Blutplasma aus Vollblut mittels einer Trennmembran,
- oder zum Befüllen eines Näpfchens einer Mikrotiterplatte aus einer Zuleitungskapillare.

## Claims

1. A device for removing a liquid from at least one capillary (7; 12; 14) into a collecting chamber, comprising:
- in each case a wedge-shaped cut-out (1; 13; 17) in a body at the exit end of the capillary into which the at least one capillary runs,
- and a radius of curvature (r) of the wedge edge of the cut-out which is smaller than half the smallest dimension of the largest capillary which runs into a wedge-shaped cut-out.
- and a wedge angle (α) between the wedge surfaces of the cut-out in the vicinity of the wedge edge of less than 150 degrees,
- the collecting chamber being adjacent to the base side (b) of the wedge-shaped cut-out.

2. A device according to claim 1, in which
- the wedge angle (α) between the wedge surfaces of the cut-out in the vicinity of the wedge edge is less than 90 degrees.

3. A device according to either of claims 1 and 2 in two-piece design for removing a liquid from at least one capillary (7; 12) which passes through a first body (6) into a collecting chamber which is provided in a second body (8), in which
- the at least one wedge-shaped cut-out (1) into which the at least one capillary (7; 12) runs at its exit end being provided in at least one projection (2; 3; 4; 5; 9; 10; 11) which is located on a base plate (8) as the second body,
- and the free end of the at least one projection (2; 3; 4; 5; 9; 10; 11) being in contact with the surface of the first body (6), in which the exit end of the at least one capillary (7; 12) is located,
- and the beginning of the wedge edge of the wedge-shaped cut-out (1) being within the exit area of the at least one capillary (7; 12).

4. A device according to claim 3, in which the at least one capillary
- is designed as a single capillary in the first body,
- or passes through the first body (6) as a plurality of discrete capillaries (7; 12) or as discrete gaps,
- or is in the form of pores or gaps in the first body, the first body being
- an open-pore membrane,
- or an open-pore sintered body
- or a nonwoven, a felt or paper.

5. A device according to either of claims 3 and 4, in which
- the wedge edge of the wedge-shaped cut-out (1) is perpendicular to the surface of the first body (6), in which the exit ends of the capillaries (7; 12) are located, or is inclined to this surface by an angle of at least 20 degrees.

6. A device according to any of claims 3 to 5, in which
- the wedge-shaped cut-outs (1) are provided in projections which have the shape of columns (2; 3; 5; 9; 10; 11), cones, pyramids or cross pieces (4).

7. A device according to either of claims 1 and 2 in one-piece design, in which
- in each case a single wedge-shaped cut-out (13; 17) runs seamlessly into the at least one capillary (14) at its exit end.

8. A device according to claim 7, in which
- the wedge-shaped cut out (13; 17) is provided in the wall of the collecting chamber (15) into which the at least one capillary (14) runs, and the beginning of the wedge edge of the wedge-shaped cut-out (13; 17) is in the wall of the capillary in the vicinity of its exit end.

9. A device according to either of claims 7 and 8, in which
- the wedge edge of the wedge-shaped cut-out (13) is perpendicular to the wall of the capillary (14),
- or the wedge edge of the wedge-shaped cut-out (17) is inclined to the wall of the capillary (14) by an angle of at least 20 degrees.

10. A device according to any of claims 1 to 9, in which
- a plurality of groups which each comprise at least one wedge-shaped cut-out and a collecting chamber are arranged one after the other (24; 25 and 21), (28 and 27), (31 and 29), and the dimension determining the capillarity of the collecting chamber is greater than the capillarity-determining dimension of the respective collecting chamber arranged therebefore.

11. The use of the device according to any of claims 1 to 10 for separating a liquid from a liquid medium.

12. The use of the device according to any of claims 1 to 10
- for separating a liquid from a solid-containing medium by means of a filter membrane,
- or for separating blood plasma from whole blood by means of a separator membrane,
- or for filling a well of a microtitre plate from a feed capillary.

## Revendications

1. Dispositif pour évacuer du liquide d'au moins un capillaire (7, 12, 14) dans une chambre collectrice comprenant :
- chaque fois une cavité (1, 13, 17) en forme de coin dans un corps à l'extrémité de sortie des capillaires et que rejoint au moins un capillaire,
- l'arête du coin de la cavité a un rayon de courbure (r) inférieur à la moitié de la plus petite dimension du plus grand capillaire qui rejoint une cavité en forme de coin,
- un angle de coin (α) entre les surfaces de coin de la cavité à proximité de l'arête de la cavité, cet angle étant inférieur à 150°,
- et la chambre collectrice fait suite au côté de base (b) de la cavité en forme de coin.

2. Dispositif selon la revendication 1,
dans lequel :
- l'angle de coin (α) entre les surfaces de coin de la cavité à proximité de l'arête de coin est inférieur à 90°.

3. Dispositif selon l'une des revendications 1 et 2, sous la forme d'une réalisation en deux parties pour évacuer un liquide d'au moins un capillaire (7, 12) qui traverse un premier corps (6) vers une chambre collectrice prévue dans un second corps (8), dans lequel
- au moins une cavité en forme de coin (1) que rejoint au moins un capillaire (7, 12) par son extrémité de sortie est prévue dans au moins une partie en saillie (2, 3, 4, 5, 9, 10, 11) qui se trouve sur une plaque de support (8) comme second corps, et
- l'extrémité libre d'au moins une saillie (2, 3, 4, 5, 9, 10, 11) touche la surface du premier corps (6) dans laquelle se trouve l'extrémité de sortie d'au moins un capillaire (7, 12), et
- le début de l'arête de coin de la cavité (1) en forme de coin se situe à l'intérieur de la surface de sortie d'au moins un capillaire (7, 12) .

4. Dispositif selon la revendication 3,
dans lequel
au moins un capillaire est réalisé :
- comme unique capillaire dans le premier corps, ou
- sous forme de plusieurs capillaires discrets (7, 12) ou comme fentes discrètes traversant le premier corps (6), ou
- comme pores ou fentes dans le premier corps, ce dernier étant
- une membrane à pores ouverts, ou
- un corps fritté à pores ouverts, ou
- un non tissé, un feutre ou du papier.

5. Dispositif selon les revendications 3 et 4,
dans lequel :
- l'arête de coin de la cavité (1) en forme de coin est perpendiculaire à la surface du premier corps (6) munie des extrémités de sortie des capillaires (7, 12) ou est inclinée par rapport à cette surface d'un angle d'au moins 20°.

6. Dispositif selon les revendications 3 à 5,
dans lequel :
- les cavités en forme de coin (1) sont prévues dans des saillies qui ont la forme de colonne (2, 3, 5, 9, 10, 11), de cône, de pyramide ou d'entretoise (4).

7. Dispositif selon l'une des revendications 1 et 2, dans une réalisation en une seule pièce dans laquelle :
- chaque fois une cavité (13, 17) en forme de coin, unique se transforme en au moins un capillaire ( 14), sans jonction à son extrémité de sortie.

8. Dispositif selon la revendication 7,
dans lequel :
- la cavité en forme de coin (13, 17) est prévue dans la paroi de la chambre collectrice (15) dans laquelle débouche au moins un capillaire (14) et le début de l'arête de coin de la cavité en forme de coin (13, 17) se situe dans la paroi du capillaire à proximité de son extrémité de sortie.

9. Dispositif selon les revendications 7 et 8,
dans lequel :
- l'arête de la cavité en forme de coin (13) est perpendiculaire à la paroi du capillaire (14), ou
- l'arête de la cavité en forme de coin (17) est inclinée par rapport à la paroi du capillaire (14) d'un angle d'au moins 20°.

10. Dispositif selon l'une des revendications 1 à 9,
dans lequel :
- plusieurs groupes qui comprennent chaque fois au moins une cavité en forme de coin et une chambre collectrice sont placés les uns derrière les autres (24, 25 et 21), (28 et 27), (31 et 29) et la dimension qui définit la capillarité d'une chambre collectrice est supérieure à la dimension qui définit la capillarité de la chambre collectrice chaque fois en amont.

11. Application du dispositif selon les revendications 1 à 10, pour séparer un liquide d'un milieu liquide.

12. Application du dispositif selon l'une des revendications 1 à 10 :
- pour séparer un liquide d'un milieu contenant des matières solides à l'aide d'une membrane de filtre, ou
- pour séparer un plasma sanguin de sang complet à l'aide d'une membrane séparatrice, ou
- pour remplir une cuvette d'une plaque de micro titrage à partir d'un capillaire d'alimentation.
